# EUROPÄISCHE PATENTSCHRIFT

(11) **EP 2 659 820 B1**
(45) Veröffentlichungstag und Bekanntmachung des Hinweises auf die Patenterteilung: **17.04.2019**
(21) Anmeldenummer: 13165292.7
(22) Anmeldetag: 25.04.2013
(51) Int. Cl.: A47L 9/12, B01D 46/00

(54) **Filterkassette für einen Staubsauger**
Filter bag for a vacuum cleaner
Cassette de filtre pour un aspirateur

(30) Priorität: 03.05.2012 DE 102012207350
(43) Veröffentlichungstag der Anmeldung: 06.11.2013
(73) Patentinhaber: BSH Hausgeräte GmbH, 81739 München (DE)
(72) Erfinder: Balling, Florian, 97616 Bad Neustadt (DE); Schmitt, Florian, 97702 Münnerstadt (DE); Storath, Martin, 97688 Bad Kissingen (DE)

(56) Entgegenhaltungen:
- CA-A1- 2 658 154
- DE-A1-102004 042 237
- GB-A- 2 440 515
- US-A1- 2002 095 742

## Beschreibung

Ausführungsbeispiele der Erfindung beziehen sich auf das Gebiet von Staubsaugern und im Speziellen auf eine Filterkassette für einen Staubsauger.

Bei Staubsaugern ist es allgemein wichtig, das Gebläse des Staubsaugers vor aufgesaugtem Staub zu schützen. Deshalb verfügen Staubsauger über ein oder mehrere Filter, die das Gebläse vor einer Zerstörung durch angesaugten Staub bewähren.

Bei einem Bodenstaubsauger sind neben dem Staubbeutel (bei sogenannten bagged Geräten) oder der Hauptabscheideeinheit (bei sogenannten bagless Geräten) weitere Filtermaterialien im Gerät vorhanden, um den Schmutz nach den genannten Einheiten zu filtern und das Gebläse vor Verschmutzung und dadurch Zerstörung zu schützen. Wegen der starken Flexibilität der Filtermaterialien sind diese häufig in sogenannten Filterkassetten angeordnet.

Zum Beispiel beschreibt die DE 43 17 715 C1 eine Filterkassette für einen Staubsauger. Diese umfasst einen Grundrahmen und ein Abdeckgitter zwischen welche ein plattenförmiges Filterelement eingefügt werden kann. Die Filterkassette wird zum Gebrauch über eine Durchtrittsöffnung in einer Zwischenwand des Staubsaugers in den Luftweg vor dem Gebläse eingebracht, um Staub vom Gebläse fern zu halten. Manchen Filterkassetten sind mit einer Dichtung umzogen. Die Handhabung der Filterkassette wird durch diese Dichtung erheblich negativ beeinträchtigt (hohe Reibung und Verkanten).

Ferner zeigt die DE 10 2004 042 237 A1 einen Staubsauger mit einem Feinstaubfilter im Abluftstrom, wobei das Feinstaubfilter in einem Filterkassettenraum am Staubsauger auswechselbar unter Zwischenlage eines Dichtelementes angeordnet ist. Um eine wirksame Dichtungsanordnung für ein Feinstaubfilter im Abluftstrom eines Staubsaugers zu gestalten, ist eine Lippendichtung im Zwischenraum des seitlichen Randes der Filterkassettenaufnahme und des seitlichen Randes des Feinstaubfilters umlaufend angeordnet.

Weiter sind aus dem Stand der Technik die GB 2 440 515 A, die CA 2 658 154 A1, die US 2002 / 0 095 742 B1 sowie die DE 10 2004 042 237 A1 bekannt, welche Filteranordnungen in einem Staubsauger offenbaren.

Es besteht jedoch weiterhin Bedarf ein Konzept zu schaffen, dass die Staubbelastung des Gebläses eines Staubsaugers weiter reduzieren kann.

Dies wird durch eine Filterkassette oder einen Staubsauger gemäß den unabhängigen Patentansprüchen ermöglicht.

Eine Filterkassette für einen Staubsauger gemäß einem Ausführungsbeispiel umfasst einen Filteraufnahmekörper zur Aufnahme eines Filtermaterials und eine Abstreifrippe. Der Filteraufnahmekörper zur Aufnahme des Filtermaterials ist in einen Luftführungskanal eines Staubsaugers in Luftströmungsrichtung einschiebbar. Ferner schließt sich die Abstreifrippe zumindest in einem Abschnitt an einen Rand des Filteraufnahmekörpers an und ist derart ausgebildet, dass die Abstreifrippe in dem Abschnitt des Randes des Filteraufnahmekörpers an einer Wand des Luftführungskanals anliegt, wenn die Filterkassette an einer im Gebrauch für die Filterkassette vorgesehenen Stelle des Luftführungskanals ist, und die Abstreifrippe bei einem Herausziehen der Filterkassette aus dem Luftführungskanal zumindest über einen Teil einer Wegstrecke des Herausziehens mit der Wand des Luftführungskanals in Kontakt bleibt.

Ausführungsbeispiele basieren auf der Erkenntnis, dass beim Herausziehen einer Filterkassette aus einem Luftführungskanal durch eine Abstreifrippe am Rand der Filterkassette an der Wand des Luftführungsschachts haftender Staub entfernt und in den Filter geführt werden kann, wenn die Abstreifrippe während des Herausziehens mit der Wand in Kontakt bleibt. Die Filterkassetten befinden sich vor dem Gebläse im staubbeaufschlagten Raum, was bedeutet dass hier ein noch erheblicher Anteil an Feinstaub vorhanden ist. Dadurch, dass die Kassette als separates Teil ausgeführt ist, gibt es Toleranzschwankungen zwischen der Filterwand und der Kassette. Dieser Zwischenraum wird ebenfalls mit Staub beaufschlagt. Beim Entnehmen der Filterkassette fällt dadurch der Schmutz aus diesem Zwischenbereich hinter den Bereich der Filterkassette und kann dadurch das Gebläse beschädigen. Dies kann durch eine Filterkassette nach dem vorgeschlagenen Konzept verhindert werden. Ebenso kann der entfernte Staub danach nicht mehr in das Gebläse des Staubsaugers fallen, wenn die Filterkassette entfernt ist. Ferner kann durch die Abstreifrippe auch der Spalt zwischen der Wand des Luftführungskanals und dem Filteraufnahmekörper der Filterkassette, die durch Fertigungstoleranzen oft vorhanden ist, überbrückt werden, so dass auch im laufenden Betrieb kein Staub zwischen der Wand des Luftführungskanals und dem Filteraufnahmekörper in das Gebläse des Staubsaugers gelangen kann. Des Weiteren ist die Filterkassette einfach zu handhaben, da sie ohne zu verkanten aus dem Luftführungskanal gezogen werden kann.

Bei einigen Ausführungsbeispielen beträgt der Teil der Wegstrecke des Herausziehens, bei dem die Abstreifrippe in Kontakt mit der Wand des Luftführungskanals bleibt, zumindest 50 % der gesamten Wegstrecke (bis hin zur gesamten Wegstrecke), die die Filmkassette bei einem vollständigen Herausziehen aus dem Luftführungskanal zurückgelegt. Dadurch kann die Wand in den Bereichen der Abstreifrippe bis hin zur gesamten Wegstrecke von Staub befreit werden.

Wiederum bei einigen Ausführungsbeispielen ist eine geometrische Form des Randes des Filteraufnahmekörpers im Wesentlichen gleich einem Querschnitt des Luftführungskanals an der im Gebrauch für die Filterkassette vorgesehenen Stelle des Luftführungskanals.

Ferner schließt sich die Abstreifrippe bei einigen Ausführungsbeispielen an einer einem Gebläseraum des Staubsaugers abgewandten Seite des Filteraufnahmekörpers an den Rand des Filteraufnahmekörpers an. Dabei kann die Abstreifrippe so ausgebildet sein und sich so an den Rand des Filteraufnahmekörpers anschließen, dass eine dem Gebläseraum des Staubsaugers abgewandte Oberfläche der Abstreifrippe von der Wand des Luftführungskanals bis zu einer Oberfläche der Filteraufnahmekörpers reicht, die ein Volumen zur Aufnahme des Filtermaterials umschließt. Dadurch kann beim Herausziehen der Filterkassette Staub von der Wand des Luftführungskanals direkt auf das Filtermaterial abgeführt werden.

In einigen Ausführungsbeispielen ist der Filteraufnahmekörper und die Abstreifrippe einstuckig ausgebildet. Dadurch können der Aufnahmekörper und die Abstreifrippe gemeinsam hergestellt werden.

Einige Ausführungsbeispiele beziehen sich auf einen Staubsauger mit einer Filterkassette nach dem beschriebenen Konzept.

Ausführungsbeispiele werden nachfolgend unter Bezugnahme auf die beiliegenden Figuren näher erläutert. So zeigen:
- Fig. 1: einen zweidimensionalen Querschnitt durch eine Filterkassette an der im Gebrauch vorgesehenen Stelle im Luftführungskanal;
- Fig. 2: einen dreidimensionalen Querschnitt durch eine Filterkassette an der im Gebrauch vorgesehenen Stelle im Luftführungskanal und weitere Teile eines Staubsaugers; und
- Fig. 3: einen dreidimensionalen Querschnitt durch eine Filterkassette während des Herausziehens aus dem Luftführungskanal und weitere Teile eines Staubsaugers.

Im Folgenden können in unterschiedlichen Ausführungsbeispielen oder Figuren teilweise für Objekte und Funktionseinheiten, die gleiche oder ähnliche funktionelle Eigenschaften aufweisen, gleiche Bezugszeichen verwendet werden. Des Weiteren können optionale Merkmale der verschiedenen Ausführungsbeispiele miteinander kombinierbar oder zueinander austauschbar sein.

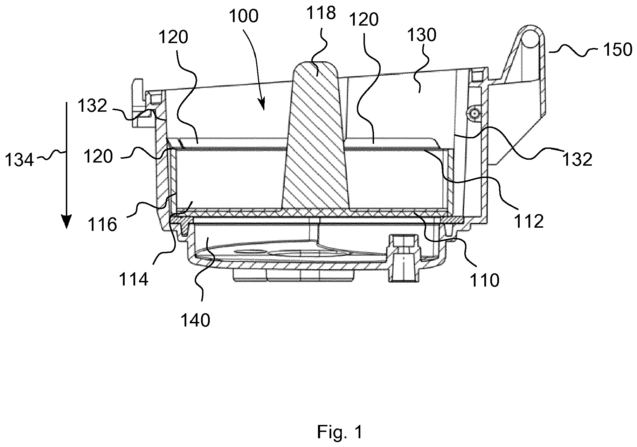

Fig. 1 zeigt einen zweidimensionalen Querschnitt durch eine Filterkassette 100 für einen Staubsauger gemäß einem Ausführungsbeispiel. Die Filterkassette 100 umfasst einen Filteraufnahmekörper 110 an dem sich eine Abstreifrippe 120 anschließt. Der Filteraufnahmekörper 110 ist zur Aufnahme eines Filtermaterials ausgebildet und ist in einen Luftführungskanal 130 eines Staubsaugers in Luftströmungsrichtung 134 einschiebbar. Die Abstreifrippe 120 schließt sich zumindest in einem Abschnitt an einen Rand 112 des Filteraufnahmekörpers 110 an und ist ausgebildet, so dass die Abstreifrippe 120 in dem Abschnitt des Randes 112 des Filteraufnahmekörpers 110 an einer Wand 132 des Luftführungskanal 130 anliegt, wenn die Filterkassette 100 an einer im Gebrauch für die Filterkassette 100 vorgesehenen Stelle des Luftführungskanal 130 ist. Ferner bleibt die Abstreifrippe 120 bei einem Herausziehen der Filterkassette 100 aus dem Luftführungskanal 130 zumindest über einen Teil einer Wegstrecke des Herausziehens mit der Wand 132 des Luftführungskanals 130 in Kontakt.

Ferner zeigt Fig. 1 zur Veranschaulichung der im Gebrauch für die Filterkassette 100 vorgesehenen Stelle im Luftführungskanal 130 den Querschnitt weiterer Teile 150 des Staubsaugers sowie einen Gebläseraum 140 des Staubsaugers.

Durch die Abstreifrippe 120 am Rand der Filterkassette 100 kann an der Wand 132 des Luftführungsschachts 130 (staubbeaufschlagte Bewandung) haftender Staub entfernt und in den Filter geführt werden, wenn die Abstreifrippe 120 während des Herausziehens mit der Wand 132 in Kontakt bleibt. Dadurch kann dieser Staub beispielsweise nicht mehr in das Gebläse des Staubsaugers fallen, wenn die Filterkassette 100 entfernt ist. Ferner kann durch die Abstreifrippe 120 auch der Spalt zwischen der Wand des Luftführungskanals 130 und dem Filteraufnahmekörper 110 der Filterkassette 100 überbrückt werden, so dass auch im laufenden Betrieb kein Staub zwischen der Wand 132 des Luftführungskanals 130 und dem Filteraufnahmekörper 110 in das Gebläse des Staubsaugers gelangen kann.

Der Filteraufnahmekörper 110 kann ein Filtermaterial (oder kurz einen Filter, wie z.B. einen Luft- oder Partikelfilter) aufnehmen. Durch den Filteraufnahmekörper 110 kann das Filtermaterial in Position gehalten werden, da dies sonst dem Filtermaterial selbst aufgrund der hohen Flexibilität des Materials selber nicht möglich wäre. Die Geometrie des Filteraufnahmekörpers 110 kann einem Querschnitt des Luftführungskanals angepasst sein, damit der Filteraufnahmekörper 110 in den Luftführungskanal 130 einschiebbar ist.

Der Filteraufnahmekörper 110 kann unterschiedlich ausgestaltet werden, um Filtermaterial aufzunehmen und einen Luftstrom durch den Luftführungskanal 130 über das Filtermaterial zu ermöglichen. Fig. 1 zeigt einen Querschnitt durch eine mögliche Ausgestaltungsform eines Filteraufnahmekörpers 110. Der Filteraufnahmekörper 110 weist dabei einen Boden (mit beispielsweise gitterförmigen Öffnungen, um einen Luftstrom im Luftführungskanal zu ermöglichen) und zu dem Boden im Wesentlichen senkrechte Seitenwände (Seitenwände, die in einem Winkel von 90° zu dem Boden angeordnet sind) auf. Beispielsweise kann der Filteraufnahmekörper 110 auf einer im Gebrauch einem Gebläseraum 140 des Staubsaugers zugewandten Seite eine gitterförmige Oberfläche mit Öffnungen aufweisen und auf einer im Gebrauch dem Gebläseraum 140 des Staubsaugers abgewandten Seite offen sein, sodass Filtermaterial über die abgewandte Seite in den Filteraufnahmekörper 110 einbringbar ist und im Gebrauch ein Luftstrom von der offenen Seite, durch ein eingebrachtes Filtermaterial und über die Öffnungen der gitterförmigen Oberfläche zu dem Gebläseraum 140 des Staubsaugers möglich ist. An einem dem Boden abgewandten Rand der Seitenwände schließt die Abstreifrippe an. Der Filteraufnahmekörper 110 ist in diesem Beispiel auf der dem Boden gegenüberliegenden Seite offen, um Filtermaterial aufnehmen zu können. Ferner umfasst die Filterkassette 100 einen Griff 118, der an dem Boden des Filteraufnahmekörpers 110 befestigt ist und über den Rand 112 des Filteraufnahmekörpers 110 hinausragt, um auch dann ergriffen werden zu können, wenn der Filteraufnahmekörper 110 mit Filtermaterial gefüllt ist.

Die Luftströmungsrichtung 134 des in einem Staubsauger verwendeten Luftführungskanals 130, für die ein Filter vorgesehen ist, ist normalerweise in Richtung das Gebläse des Staubsaugers gerichtet, da der Staubsauger über den Luftführungskanal 130 Luft ansaugt. Weist der Luftführungskanal 130 in einem Bereich einen konstanten Querschnitt auf ist die Luftströmungsrichtung 134 in diesem Bereich üblicherweise im Wesentlichen parallel zur Wand des Luftführungskanals 130.

Die Abstreifrippe 120 (oder auch Abstreiflippe genannt) schließt sich an den Rand 112 des Filteraufnahmekörpers 110 an und steht mit ihrem freien Ende mit der Wand 132 des Luftführungskanals 130 in Kontakt. Die Abstreifrippe 120 kann beispielsweise nur in einem kleinen Abschnitt des Randes 112 des Filteraufnahmekörpers 110 angeordnet sein, um zum Beispiel insbesondere Teile der Wand 132 des Luftführungskanals 130 beim Herausziehen von Staub zu befreien, die aufgrund der Luftströmungsverhältnisse besonders stark mit Staub bedeckt werden. Bevorzugt schließt sich die Abstreifrippe 120 jedoch zumindest entlang der Hälfte der Länge des Randes 112 des Filteraufnahmekörpers 110 an den Filteraufnahmekörper 110 an und liegt über diese Länge an der Wand 132 des Luftführungskanals 130 an, wenn die Filterkassette 100 an der im Gebrauch für die Filterkassette 100 vorgesehenen Stelle des Luftführungskanals 130 ist.

Die Abstreifrippe 120 kann sich an einer einem Gebläseraum 140 des Staubsaugers abgewandten Seite des Filteraufnahmekörpers 110 an den Rand 112 des Filteraufnahmekörpers 110 anschließen, wenn die Filterkassette 100 an einer im Gebrauch für die Filterkassette 100 vorgesehenen Stelle des Luftführungskanals 130 ist. Ferner kann die Abstreifrippe 120 ausgebildet sein und sich an den Rand 112 des Filteraufnahmekörpers 110 anschließen, so dass eine dem Gebläseraum 140 des Staubsaugers abgewandte Oberfläche der Abstreifrippe 120 von der Wand 132 des Luftführungskanals 130 bis zu einer Oberfläche bzw. Wand 116 des Filteraufnahmekörpers 110 reicht, die ein Volumen 114 zur Aufnahme des Filtermaterials umschließt. Gemäß Ausführungsbeispielen können die Wände 132 und 116 im Wesentlichen parallel verlaufen, wenn sich die Filterkassette 100 an der für deren Gebrauch vorgesehenen Stelle des Luftführungskanals 130 befindet. Um den Staub effizient von der Wand 132 des Luftführungskanals 130 auf das Filtermaterial im Filteraufnahmekörper 110 abführen zu können, kann die Abstreifrippe 120 ausgebildet werden, sodass keine Kanten zwischen der Kantaktstelle an der Wand 132 und dem Rand 112 des Filteraufnahmekörpers 110 auftreten, also eine möglichst glatte Oberfläche zum Abführen des Staubes gebildet wird.

Bereits der Kontakt der Abstreifrippe 120 mit der Wand 132 des Luftführungskanals 130 über einen kurzen Teil der Wegstrecke des Herausziehens kann eine Menge Staub von der Wand 120 entfernen, die nicht mehr im Gebläse des Staubsaugers landen kann. Bevorzugt ist die Abstreifrippe 120 jedoch so ausgebildet, dass der Teil der Wegstrecke des Herausziehens, bei dem die Abstreifrippe 120 in Kontakt mit der Wand des Luftführungskanals 130 bleibt, zumindest 50 % (oder 70, 80 oder 90 %) der gesamten Wegstrecke oder die gesamte Wegstrecke ist, die die Filterkassette 100 bei einem vollständigen Herausziehen (beginnend von der im Gebrauch für die Filterkassette vorgesehenen Stelle) aus dem Luftführungskanal 130 zurücklegt. Dadurch kann der Staub über einen Großteil der Wegstrecke oder die gesamte Wegstrecke der Filterkassette 100 durch den Luftführungskanal 130 von der Wand 132 entfernt werden.

Beispielsweise kann ein Kontakt über einen großen Teil der Wegstrecke des Herausziehens der Filterkassette 100 gewährleistet werden, wenn die Abstreifrippe 120 entsprechend lang und mit ausreichend Vorspannung (an der im Gebrauch vorgesehenen Stelle) gegenüber der Wand 132 ausgebildet ist oder der Luftführungskanal 130 über den entsprechenden Teil der Wegstrecke einen im Wesentlichen konstanten Querschnitt aufweist. Zum Beispiel kann die Filterkassette 100 in einem Staubsauger verwendet werden, der einen Luftführungskanal 130 mit einem Querschnitt aufweist, der über zumindest 50 % (oder 70, 80 oder 90 %) der Wegstrecke oder die gesamte Wegstrecke des Herausziehens der Filterkassette 100 aus dem Luftführungskanal 130 konstant ist.

Um mit der Wand 132 in Kontakt zu kommen kann die Abstreifrippe 120, wie in Fig. 1 gezeigt, über den Rand 112 des Filteraufnahmekörpers 110 hinausragen. In anderen Worten, die Abstreifrippe 120 kann ausgebildet sein und sich an den Rand 112 des Filteraufnahmekörpers 110 anschließen, so dass im Gebrauch die Abstreifrippe 120 mit der Wand des Luftführungskanals 130 an einer Stelle Kontakt hat, die in entgegengesetzter Luftströmungsrichtung 134 weiter von dem Gebläseraum 140 des Staubsaugers entfernt ist als der Rand 112 des Filteraufnahmekörpers 110.

Damit die Abstreifrippe 120 nicht zu lang wird (und dadurch schneller beschädigt werden kann) kann eine geometrische Form des Randes 112 des Filteraufnahmekörpers 110 im Wesentlichen gleich einem Querschnitt des Luftführungskanals 130 an der im Gebrauch für die Filterkassette 110 vorgesehenen Stelle des Luftführungskanals 130 sein. Der Filteraufnahmekörper 110 weist dann beispielsweise lediglich einen unwesentlich kleineren Querschnitt als der Luftführungskanal 130 auf. Der entstehende Spalt zwischen der Wand 132 des Luftführungskanals 130 und dem Filteraufnahmekörper 110 kann durch die Abstreifrippe 120 überbrückt werden. In anderen Worten, die Abstreifrippe 120 kann ausgebildet sein und sich an den Rand 112 des Filteraufnahmekörpers 110 anschließen, so dass im Gebrauch ein Spalt zwischen dem Filteraufnahmekörper 110 und der Wand 132 des Luftführungskanals 130 überbrückt wird.

Der Filteraufnahmekörper 110 und die Abstreifrippe 120 können einstückig (oder auch zweistückig, beispielswiese durch ein federelastisches Element gekoppelt) ausgebildet sein. Ferner kann die Abstreifrippe 120 und/oder der Filteraufnahmekörper 110 aus einem Material gefertigt sein, dass einen Kunststoff, beispielsweise Polycarbonat oder Acrylnitril-Butadien-Styrol umfasst. Weitere mögliche Materialien für die Abstreifrippe 120 sind beispielsweise auch gummiartige, elastische Kunststoffe, sodass eine besonders gute Anpassung an eine Innenkontur der Wand 132 des Luftführungskanals 130 ermöglicht wird.

In anderen Worten, die Filterkassette 100 beruht unter anderem auf der Erkenntnis, an der Außenwand der Filterkassette eine von dem Filteraufnahmekörper 110 weg und schräg zur Wand 132 des Luftführungskanals 130 weisende Abstreifrippe 120 anzubringen. In anderen Worten ausgedrückt hat die schräg verlaufende Abstreifrippe 120 eine Richtungskomponente in stromaufwärtiger Richtung, d.h. entgegen eines Abluftstroms bzw. vom Gebläseraum 140 weg und eine dazu senkrechte Richtungskomponente in Richtung der Wand 132 des Luftführungskanals 130. Diese Rippe 120 hat zum einen die Wirkung die Wände 132, in denen die Filterkassette eingelegt ist, abzustreifen und den Schmutz von der Wand 132 auf den Filter zu ziehen. Dadurch wird zum Einen die Filterwirkung dieser Kassette 100 erhöht und zudem verhindert, dass Schmutz, welcher bei der Entnahme hinter bzw. in den Zwischenraum fällt, nicht in das Gebläse gelangt. Darüber ermöglicht die Rippe 120, dass die Filterkassette 100 in der Tiefe des Raumes angeordnet werden kann, da durch die Rippe 120 beim Entnehmen der Filterkassette der darüber gelagerte Bereich (durch Abstreifen von Staub) gereinigt wird. Zudem fixiert die Rippe 120 die Filterkassette 100 in ihrer definierten Position und verhindert dadurch ein "Abklopfen" der Filterwände beim Entnehmen sowie beim Gebrauch.

Durch diesen konstruktiven Aufbau ist es möglich eine der Hauptursachen der Gebläsebeschädigung zu eliminieren. Die Rippe 120 hält zum einen Grob- und Feinschmutzpartikel zurück, welche beim Entnehmen von herkömmlichen Filtern in das Gebläse gelangen. Dadurch wird das Ausfallrisiko der Gebläse erheblich verringert. Darüber hinaus werden zudem die Wände 132, in welcher die Filterkassette 100 angeordnet ist, beim Entnehmen der Kassette 100 vollständig gereinigt. Ein weiterer Vorteil ist die Möglichkeit der Anordnung der Filterkassette 100 in der Tiefe des Gerätes (in einem Luftführungskanal), da bei herkömmlichen Kassetten 100 die Anordnung an der Oberkante zur Geräteöffnung erfolgen muss. Darüber hinaus wird bei einem ungewollte "Abschütteln" der Filterwände (durch Vibrationseinwirkung auf das Gerät, wie z.B. Fall, Stoß, einer "rauen" Fahrbewegung, der Schmutz auf den Filter geleitet und kann nicht in den Bereich zwischen Filterkassette 100 und Gehäusewand 132 gelangen.

Die Filterkassette kann also ausgebildet sein, sodass bei der Entnahme des Filterträgers mindestens eine Wand eines Filterkanals (Luftführungskanal) von anhaftenden Staub befreit wird. Die Abstreifrippe (Dichtung) kann einteilig (an die Filterkassette) mit angespritzt oder ein separates Teil sein. Die Abstreifrippe (Dichtung) kann umlaufend (360 Grad geschlossen) ausgebildet sein. Der Staub kann sich dann bei der Entnahme auf dem Filter sammeln und anhaftender Staub kann nicht in die Ansaugöffnung des Gebläses fallen.

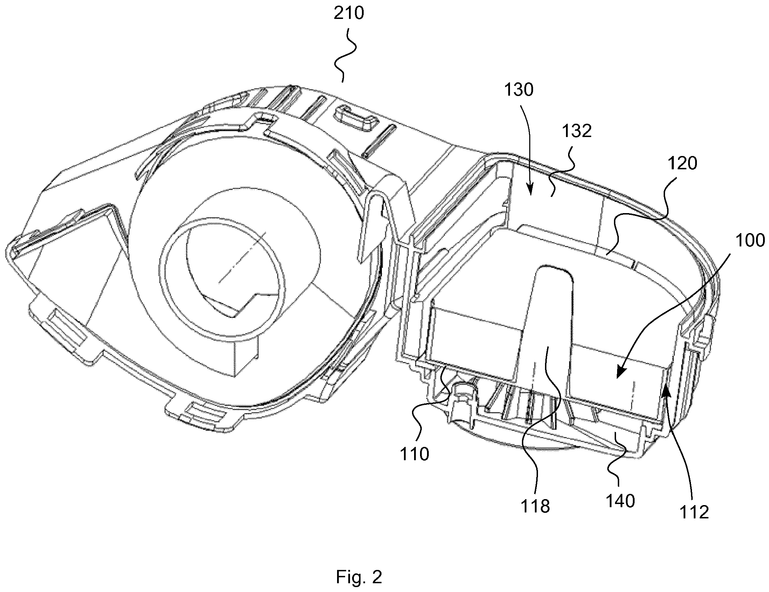

Fig. 2 zeigt einen dreidimensionalen Querschnitt durch eine Filterkassette 100 an der im Gebrauch vorgesehenen Stelle im Luftführungskanal 130 und weitere Teile 210 eines Staubsaugers (Filterkassette in eingesetzter Position). Die Filterkassette 100 entspricht dabei vom Aufbau jener, die bereits in Fig. 1 gezeigt ist.

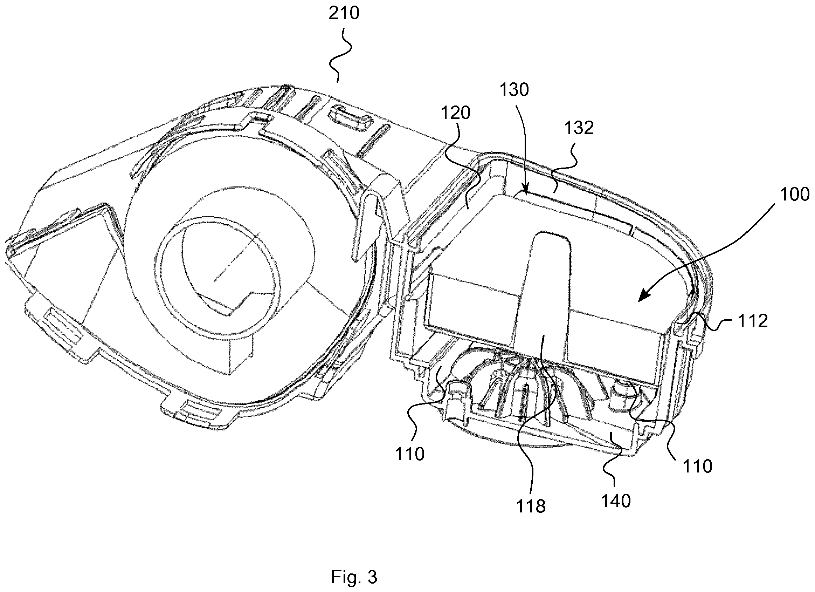

Die Filterkassette kann manuell über den Griff aus dem Luftführungskanal 130 Herausgezogen werden. Fig. 3 zeigt einen dreidimensionalen Querschnitt durch eine Filterkassette 100 während des Herausziehens aus dem Luftführungskanal 130 und weitere Teile 210 eines Staubsaugers (Filterkassette bei Entnahme). Die Filterkassette 100 entspricht dabei wiederum vom Aufbau jener, die bereits in Fig. 1 gezeigt ist.

Einige Ausführungsbeispiele beziehen sich auf einen Staubsauger mit einer Filterkassette 100 nach dem zuvor beschriebenen Konzept. Dabei kann die Filterkassette eine oder mehrere der zuvor beschriebenen optionalen Ausgestaltungen aufweisen.

Weitere Ausführungsbeispiele beziehen sich auf eine umlaufende Abstreifrippe an einer Filterkassette.

Die in der vorstehenden Beschreibung, den nachfolgenden Ansprüchen und in den Zeichnungen offenbarten Merkmale können sowohl einzeln als auch in beliebiger Kombination für die Verwirklichung der Erfindung in ihren verschiedenen Ausgestaltungen von Bedeutung sein.

Obwohl manche Aspekte der vorliegenden Erfindung im Zusammenhang mit einer Vorrichtung beschrieben wurden, versteht es sich, dass diese Aspekte auch eine Beschreibung eines entsprechenden Verfahrens darstellen, sodass ein Block oder ein Bauelement einer Vorrichtung auch als ein entsprechender Verfahrensschritt oder als ein Merkmal eines Verfahrensschritts, beispielsweise einem Verfahren zum Herstellen oder Betreiben einer Filterkassette, zu verstehen ist. Analog dazu stellen Aspekte, die im Zusammenhang mit einem oder als ein Verfahrensschritt beschrieben wurden, auch eine Beschreibung eines entsprechenden Blocks oder Details bzw. Merkmals einer entsprechenden Vorrichtung dar.

Die oben beschriebenen Ausführungsbeispiele stellen lediglich eine Veranschaulichung der Prinzipien der vorliegenden Erfindung dar. Es versteht sich, dass Modifikationen und Variationen der hierin beschriebenen Anordnungen und Einzelheiten anderen Fachleuten einleuchten werden. Deshalb ist beabsichtigt, dass die Erfindung lediglich durch den Schutzumfang der nachstehenden Patentansprüche und nicht durch die spezifischen Einzelheiten, die anhand der Beschreibung und der Erläuterung der Ausführungsbeispiele präsentiert wurden, beschränkt ist.

### BEZUGSZEICHENLISTE

- 100: Filterkassette
- 110: Filteraufnahmekörper
- 112: Rand des Filteraufnahmekörpers
- 114: Volumen zur Aufnahme des Filtermaterials
- 116: Oberfläche des Filteraufnahmekörpers
- 118: Griff
- 120: Abstreifrippe
- 130: Luftführungskanal
- 132: Wand des Luftführungskanals
- 134: Luftströmungsrichtung
- 140: Gebläseraum
- 150: weiterer Teile des Staubsaugers
- 210: weitere Teile des Staubsaugers

## Patentansprüche

1. Filterkassette (100) für einen Staubsauger, mit folgenden Merkmalen:
einem Filteraufnahmekörper (110) zur Aufnahme eines Filtermaterials, der in einen Luftführungskanal (130) eines Staubsaugers in Luftströmungsrichtung (134) einschiebbar ist; und
einer Abstreifrippe (120), die sich zumindest in einem Abschnitt an einen Rand (112) des Filteraufnahmekörpers (110) anschließt und ausgebildet ist, **dadurch gekennzeichnet dass** die Abstreifrippe (120) in dem Abschnitt des Randes (112) des Filteraufnahmekörpers (110) an einer Wand (132) des Luftführungskanals (130) anliegt, wenn die Filterkassette (100) an einer im Gebrauch für die Filterkassette (100) vorgesehenen Stelle des Luftführungskanals (130) ist, und die Abstreifrippe (120) bei einem Herausziehen der Filterkassette (100) aus dem Luftführungskanal (130) zumindest über einen Teil einer Wegstrecke des Herausziehens mit der Wand (132) des Luftführungskanals (130) in Kontakt bleibt.

2. Filterkassette gemäß Anspruch 1, wobei der Teil der Wegstrecke des Herausziehens, bei dem die Abstreifrippe (120) in Kontakt mit der Wand des Luftführungskanals (130) bleibt, zumindest 50 % der gesamten Wegstrecke ist, die die Filterkassette (100) bei einem vollständigen Herausziehen aus dem Luftführungskanal (130) zurücklegt.

3. Filterkassette gemäß Anspruch 1 oder 2, wobei eine geometrische Form des Randes (112) des Filteraufnahmekörpers (110) im Wesentlichen gleich einem Querschnitt des Luftführungskanals (130) an der im Gebrauch für die Filterkassette (100) vorgesehenen Stelle des Luftführungskanals (130) ist.

4. Filterkassette gemäß einem der vorhergehenden Ansprüche, wobei der Filteraufnahmekörper (110) und die Abstreifrippe (120) einstückig ausgebildet sind.

5. Filterkassette gemäß einem der vorhergehenden Ansprüche, wobei die Abstreifrippe (120) sich an einer einem Gebläseraum (140) des Staubsaugers abgewandten Seite des Filteraufnahmekörpers (110) an den Rand des Filteraufnahmekörpers (110) anschließt, wenn die Filterkassette (100) an einer im Gebrauch für die Filterkassette (100) vorgesehenen Stelle des Luftführungskanals (130) ist.

6. Filterkassette gemäß Anspruch 5, wobei die Abstreifrippe (120) sich an den Rand des Filteraufnahmekörpers (110) anschließt, sodass eine dem Gebläseraum (140) des Staubsaugers abgewandte Oberfläche der Abstreifrippe (120) von der Wand (132) des Luftführungskanals (130) bis zu einer Oberfläche (116) des Filteraufnahmekörpers (110) reicht, die ein Volumen (114) zur Aufnahme des Filtermaterials bildet.

7. Filterkassette gemäß einem der vorhergehenden Ansprüche, wobei die Abstreifrippe (120) sich an den Rand des Filteraufnahmekörpers (110) anschließt, sodass im Gebrauch die Abstreifrippe (120) mit der Wand (132) des Luftführungskanals (130) an einer Stelle Kontakt hat, die in entgegengesetzter Luftströmungsrichtung (134) weiter von dem Gebläseraum (140) entfernt ist als der Rand des Filteraufnahmekörpers (110).

8. Filterkassette gemäß einem der vorhergehenden Ansprüche, wobei die Abstreifrippe (120) sich an den Rand des Filteraufnahmekörpers (110) anschließt, sodass im Gebrauch ein Spalt zwischen dem Filteraufnahmekörper (110) und der Wand des Luftführungskanals (130) überbrückt wird.

9. Filterkassette gemäß einem der vorhergehenden Ansprüche, wobei die Abstreifrippe (120) sich an den Rand des Filteraufnahmekörpers (110) anschließt, sodass ein an der Wand (133) des Luftführungskanals (130) haftender Staub bei einem Herausziehen der Filterkassette (100) aus dem Luftführungskanal (130) über die Abstreifrippe (120) auf ein Filtermaterial in dem Filteraufnahmekörper (110) abführt wird.

10. Filterkassette gemäß einem der vorhergehenden Ansprüche, wobei sich die Abstreifrippe (120) zumindest entlang der Hälfte der Länge des Randes (112) des Filteraufnahmekörpers (110) an den Filteraufnahmekörper (110) anschließt und über diese Länge an der Wand (133) des Luftführungskanals (130) anliegt, wenn die Filterkassette (100) an einer im Gebrauch für die Filterkassette (100) vorgesehenen Stelle des Luftführungskanals (130) ist.

11. Filterkassette gemäß einem der vorhergehenden Ansprüche, wobei die Abstreifrippe (120) und der Filteraufnahmekörper (110) aus einem Material gefertigt sind, das einen Kunststoff, insbesondere Polycarbonat oder Acrylnitril-Butadien-Styrol, umfasst.

12. Filterkassette gemäß einem der vorhergehenden Ansprüche, wobei der Filteraufnahmekörper (110) auf einer im Gebrauch einem Gebläseraum (140) des Staubsaugers zugewandten Seite eine gitterförmige Oberfläche mit Öffnungen aufweist und auf einer im Gebrauch dem Gebläseraum (140) des Staubsaugers abgewandten Seite offen ist, sodass Filtermaterial über die abgewandte Seite in den Filteraufnahmekörper (110) einbringbar ist und im Gebrauch ein Luftstrom von der offenen Seite, durch ein eingebrachtes Filtermaterial und über die Öffnungen der gitterförmigen Oberfläche zu dem Gebläseraum (140) des Staubsaugers möglich ist.

13. Staubsauger mit einer Filterkassette (100) gemäß einem der vorhergehenden Ansprüche.

14. Staubsauger gemäß Anspruch 13, wobei ein Querschnitt des Luftführungskanals (130) über zumindest 50 % der Wegstrecke eines vollständigen Herausziehens der Filterkassette (100) aus dem Luftführungskanal (130) im Wesentlichen konstant ist.

## Claims

1. Filter cassette (100) for a vacuum cleaner, having the following features:
a filter holder (110) for holding a filter material which can be inserted into an air guide duct (130) of a vacuum cleaner in the air flow direction (134); and
a stripping rib (120), which, at least in one section, connects to an edge (112) of the filter holder (110) and is embodied,
**characterised in that** in the section of the edge (112) of the filter holder (110), the stripping rib (120) rests against a wall (132) of the air guide duct (130) when the filter cassette (100) is at a point in the air guide duct (130) provided for the filter cassette (100) during use, and the stripping rib (120) remains in contact with the wall (132) of the air guide duct (130) at least across one part of a removal distance when the filter cassette (100) is removed from the air guide duct (130).

2. Filter cassette according to claim 1, wherein the part of the removal distance, in which the stripping rib (120) remains in contact with the wall of the air guide duct (130), is at least 50% of the whole distance, which the filter cassette (100) covers when it is removed entirely from the air guide duct (130).

3. Filter cassette according to claim 1 or 2, wherein a geometric form of the edge (112) of the filter holder (110) is essentially identical to a cross-section of the air guide duct (130) at the point in the air guide duct (130) provided for the filter cassette (100) during use.

4. Filter cassette according to one of the preceding claims, wherein the filter holder (110) and the stripping rib (120) are embodied in one piece.

5. Filter cassette according to one of the preceding claims, wherein the stripping rib (120) connects to a side of the filter holder (110) facing away from a fan space (140) of the vacuum cleaner at the edge of the filter holder (110), when the filter cassette (100) is at a point in the air guide duct (130) provided for the filter cassette (100) during use.

6. Filter cassette according to claim 5, wherein the stripping rib (120) connects to the edge of the filter holder (110), so that a surface of the stripping rib (120) which faces away from the fan space (140) of the vacuum cleaner extends from the wall (132) of the air guide duct (130) as far as a surface (116) of the filter holder (110), which forms a volume (114) for holding the filter material.

7. Filter cassette according to one of the preceding claims, wherein the stripping rib (120) connects to the edge of the filter holder (110), so that during use the stripping rib (120) has contact with the wall (132) of the air guide duct (130) at a point which, in the opposite air flow direction (134), is further away from the fan space (140) than the edge of the filter holder (110).

8. Filter cassette according to one of the preceding claims, wherein the stripping rib (120) connects to the edge of the filter holder (110), so that during use a gap between the filter holder (110) and the wall of the air guide duct (130) is bridged.

9. Filter cassette according to one of the preceding claims, wherein the stripping rib (120) connects to the edge of the filter holder (110), so that dust adhering to the wall (133) of the air guide duct (130) is discharged via the stripping rib (120) onto a filter material in the filter holder (110) when the filter cassette (100) is removed from the air guide duct (130).

10. Filter cassette according to one of the preceding claims, wherein the stripping rib (120) connects to the filter holder (110) at least along half of the length of the edge (112) of the filter holder (110) and rests across this length against the wall (133) of the air guide duct (130) when the filter cassette (100) is at a point in the air guide duct (130) provided for the filter cassette (100) during use.

11. Filter cassette according to one of the preceding claims, wherein the stripping rib (120) and the filter holder (110) are manufactured from a material, which comprises a plastic, in particular polycarbonate or acrylonitrile-butadiene-styrene.

12. Filter cassette according to one of the preceding claims, wherein the filter holder (110) has a mesh-type surface with openings on a side which faces a fan space (140) of the vacuum cleaner during use and is open on a side which faces away from the fan space (140) of the vacuum cleaner during use, so that filter material can be introduced into the filter holder (110) via the far side and during use an air flow from the open side, through an introduced filter material and via the openings in the mesh-type surface to the fan space (140) of the vacuum cleaner is possible.

13. Vacuum cleaner having a filter cassette (100) according to one of the preceding claims.

14. Vacuum cleaner according to claim 13, wherein a cross-section of the air guide duct (130) is essentially constant over at least 50% of the distance of a complete removal of the filter cassette (100) from the air guide duct (130).

## Revendications

1. Cassette de filtre (100) pour un aspirateur, comprenant :
un corps de logement de filtre (110) destiné à loger un matériau filtrant qui peut être inséré dans un conduit d'air (130) d'un aspirateur dans la direction du flux d'air (134), et
une nervure de raclage (120) qui est formée, au moins dans une partie, au niveau d'un bord (112) et se raccorde à ce bord (112) du corps de logement de filtre (110), **caractérisée en ce que** la nervure de raclage (120), dans la partie du bord (112) du corps de logement de filtre (110), est adjacente à une paroi (132) du conduit d'air (130) lorsque la cassette de filtre (100) est à un emplacement prévu du conduit d'air (130) pour la cassette de filtre (100) en service, et la nervure de raclage (120), lors d'une extraction de la cassette de filtre (100) hors du conduit d'air (130), demeure en contact, au moins sur une partie du trajet d'extraction, avec la paroi du conduit d'air (130).

2. Cassette de filtre selon la revendication 1, dans laquelle la partie du trajet d'extraction dans laquelle la nervure de raclage (120) reste en contact avec la paroi du conduit d'air (130) représente au moins 50 % du trajet total que la cassette de filtre (100) parcoure lors d'une extraction complète hors du conduit d'air (130).

3. Cassette de filtre selon la revendication 1 ou 2, dans laquelle la forme géométrique du bord (112) du corps de logement de filtre (110) est sensiblement identique à la coupe transversale du conduit d'air (130) à l'endroit du conduit d'air (130) prévu en service pour la cassette de filtre (100).

4. Cassette de filtre selon l'une quelconque des revendications précédentes, dans lequel le corps de logement de filtre (110) et la nervure de raclage (120) sont formés solidairement.

5. Cassette de filtre selon l'une quelconque des revendications précédentes, dans laquelle la nervure de raclage (120) se raccorde, à un côté du corps de logement de filtre (110) opposé à un espace de ventilateur (140) de l'aspirateur, au bord du corps de logement de filtre (110) lorsque la cassette de filtre (100) est à un emplacement prévu du conduit d'air (130) pour la cassette de filtre (100) en service.

6. Cassette de filtre selon la revendication 5, dans laquelle la nervure de raclage (120) se raccorde au bord du corps de logement de filtre (110) de telle manière qu'une surface de la nervure de raclage (120) opposée à l'espace de ventilateur (140) de l'aspirateur s'étend de la paroi (132) du conduit d'air (130) jusqu'à une surface (116) du corps de logement de filtre (110) qui forme un volume (114) de logement du matériau filtrant.

7. Cassette de filtre selon l'une quelconque des revendications précédentes, dans laquelle la nervure de raclage (120) se raccorde au bord du corps de logement de filtre (110) de telle manière qu'en service, la nervure de raclage (120) est en contact avec la paroi (132) du conduit d'air (130) à un endroit qui est plus éloigné, dans le sens inverse du flux d'air (134), de l'espace de ventilateur (140) que le bord du corps de logement de filtre (110).

8. Cassette de filtre selon l'une quelconque des revendications précédentes, dans laquelle la nervure de raclage (120) se raccorde au bord du corps de logement de filtre (110) de telle manière qu'en service, un intervalle entre le corps de logement de filtre (110) et la paroi du conduit d'air (130) est comblé.

9. Cassette de filtre selon l'une quelconque des revendications précédentes, dans laquelle la nervure de raclage (120) se raccorde au bord du corps de logement de filtre (110) de telle manière que de la poussière adhérant à la paroi (133) du conduit d'air (130) est écartée lors d'une extraction de la cassette de filtre (100) hors du conduit d'air (130) par la nervure de raclage sur un matériau filtrant dans le corps de logement de filtre (110).

10. Cassette de filtre selon l'une quelconque des revendications précédentes, dans laquelle la nervure de raclage (120) se raccorde au corps de logement de filtre (110) au moins le long de la moitié de la longueur du bord (112) du corps de logement de filtre (110) et est adjacent sur cette longueur à la paroi (133) du conduit d'air (130) lorsque la cassette de filtre (100) est à un emplacement prévu du conduit d'air (130) pour la cassette de filtre (100) en service.

11. Cassette de filtre selon l'une quelconque des revendications précédentes, dans laquelle la nervure de raclage (120) et le corps de logement de filtre (110) sont fabriqués en un matériau qui comprend une matière plastique, notamment du polycarbonate ou de l'acrylonitrile-butadiène-styrène.

12. Cassette de filtre selon l'une quelconque des revendications précédentes, dans laquelle le corps de logement de filtre (110) comprend une surface en forme de grille dotée d'ouvertures sur une face tournée vers un espace de ventilateur (140) de l'aspirateur en service et est ouvert sur un côté opposé à l'espace de ventilateur (140) de l'aspirateur en service, de telle sorte qu'un matériau filtrant peut être introduit par le côté opposé dans le corps de logement de filtre (110) et qu'en service, un flux d'air peut passer depuis le côté ouvert à travers un matériau filtrant mis en place et via les ouvertures de la surface en forme de grille jusqu'à l'espace de ventilateur (140) de l'aspirateur.

13. Aspirateur comprenant une cassette de filtre (100) selon l'une quelconque des revendications précédentes.

14. Aspirateur selon la revendication 13, dans lequel la section transversale du conduit d'air (130) sur au moins 50 % du parcours d'une extraction complète de la cassette de filtre (100) hors du conduit d'air (130) est essentiellement constante.
